# EUROPEAN PATENT APPLICATION

(11) **EP 0 753 674 A1**
(43) Date of publication of application: **15.01.1997**
(21) Application number: 94927097.9
(22) Date of filing: 22.09.1994
(51) Int. Cl.: F16B 15/04

(54) **MEMBER FIXING MEANS**

(30) Priority: 24.09.1993 JP 261658/93; 24.09.1993 JP 261659/93; 24.09.1993 JP 261660/93; 24.09.1993 JP 261661/93; 24.09.1993 JP 261662/93; 24.09.1993 JP 261663/93; 24.09.1993 JP 261664/93; 24.09.1993 JP 261665/93
(71) Applicant: OSADA, Yoshimasa, Kawachinagano-shi, Osaka 586 (JP)
(72) Inventor: OSADA, Yoshimasa, Kawachinagano-shi, Osaka 586 (JP)
(74) Representative: Giles, Ashley Simon
(86) International application number: JP9401571
(87) International publication number: WO9508718

(57) **Abstract**

A member fixing means comprises an outer cylinder having a flange on one end of a cylinder body and holes disposed near the other end of the cylinder body, a pointed portion bent and integrally formed on the other end of the outer cylinder or separately provided to be secured to the other end of the outer cylinder, a shaft inserted into the outer cylinder through one end thereof and having a head on one end of the shaft, a rod-shaped anchoring member which is interposed between the other end of the shaft and the pointed portion or integrally formed on the shaft or separately provided to be secured to the shaft, and the other end of which anchoring member fronts the holes of the outer cylinder, and a removable spacer cylinder interposed between the flange of the outer cylinder and the head of the shaft, the outer cylinder being such that a portion thereof extending to the flange is made bigger than the remaining portion of the outer cylinder.

## Description

This invention relates to a fastener such as nail, rivet, etc.

As an example of prior art, there is one which was indicated on the Utility Model Publication No. 62-196914. This art consists in dividing the leg of a nail along the axial direction into a pair of leg pieces and inserting a thin strip plate easy to bend between those leg pieces. As the nail is driven into foamed concrete, the concrete layer advances into the space between the leg pieces from the bottom end of the leg pieces while the strip plate is gradually folded upward in zigzag, and said leg pieces open at bottom in the shape of the letter λ to become an

However, with the art described above, the nail unduly destroys the driving layer because the leg pieces start opening simultaneously with the driving, thus producing a cavity in the driving layer and weakening its yield strength to drawing.

The object of the present invention is to provide a fastener which solves the above-mentioned problem without unduly destroying the driving layer at the time of driving.

### DISCLOSURE OF THE INVENTION

For the solution of the above-mentioned problem, the present invention will be constructed as described hereafter. Namely, the first construction comprises an external cylinder having a flange at one end of the cylinder body and holes near the other end, a pointed head formed integrally by bending or fastened as a separate piece at the other end of the external cylinder, a shaft inserted from one end of said external cylinder and having a head at one end, a bar-shaped anchor member interposed between the other end of the shaft and said pointed head or formed integrally with said shaft or fastened to it as a separate piece, the other end of which faces the holes of said external cylinder, and a spacer cylinder interposed between said external cylinder flange and said shaft head, and the portion up to said flange of said external cylinder is larger in size compared with other parts thereof.

The second construction comprises an external cylinder having a flange at one end of the cylinder body and holes near the other end, a pointed head formed integrally by bending or fastened as a separate piece at the other end of the external, a shaft inserted from one end of said external cylinder and having a convex part serving as tightening allowance with inner face of said external cylinder and protector against falling on the outer circumference, and a bar-shaped anchor member interposed between the other end of the shaft and said pointed head or formed integrally with said shaft or fastened to it as a separate piece, the other end of which faces the holes of said external cylinder, and the portion up to said flange of said external cylinder is larger in size compared with other parts thereof.

The third construction comprises :
an external cylinder having a flange at one end of the cylinder body and holes near the other end,
a pointed head formed integrally by bending or fastened as a separate piece at the other end of the external,
a shaft inserted from one end of said external cylinder and having a convex part serving as tightening allowance with inner face of said external cylinder and protector against falling on the outer circumference, and
a bar-shaped anchor member interposed between the other end of the shaft and said pointed head or formed integrally with said shaft or fastened to it as a separate piece, the other end of which faces the holes of said external cylinder, and
   on the bottom face of said shaft is formed a concave part for positioning.

The forth construction comprises :
an external cylinder having a flange at one end of the cylinder body and holes near the other end,
a pointed head formed integrally by bending or fastened as a separate piece at the other end of the external,
a shaft inserted from one end of said external cylinder and having a convex part serving as tightening allowance with inner face of said external cylinder and protector against falling on the outer circumference, and
a bar-shaped anchor member interposed between the other end of the shaft and said pointed head or formed integrally with said shaft or fastened to it as a separate piece, the other end of which faces the holes of said external cylinder, and
   the hole of the external cylinder being slit along in the axial direction of the external cylinder.

The fifth construction comprises :
an external cylinder having a flange at one end of the cylinder body and holes near the other end,
a pointed head formed integrally by bending or fastened as a separate piece at the other end of the external,
a shaft inserted from one end of said external cylinder and having a convex part serving as tightening allowance with inner face of said external cylinder and protector against falling on the outer circumference, and
a bar-shaped anchor member interposed between the other end of the shaft and said pointed head or formed integrally with said shaft or fastened to it as a separate piece, the other end of which faces the holes of said external cylinder, and
a sleeve inserted in the outer circumfelence of the portion up to the flange of the external cylinder.

The sixth construction comprises :
an external cylinder having a flange at one end of the cylinder body and holes near the other end,
a pointed head formed integrally by bending or fastened as a separate piece at the other end of the external,
a shaft inserted from one end of said external cylinder,
a convex formed on either the outer circumference of the shaft or on the inner face of said external cylinder for serving as tightening allowance, so that by hitting the shaft is driven together with the external cylinder and after reaching the flange of the external cylinder to the material surface the shaft is driven into the external cylinder,
a bar-shaped anchor member interposed between the other end of the shaft and said pointed head or formed integrally with said shaft or fastened to it as a separate piece, the other end of which faces the holes of said external cylinder, and
a circumferential convex stripe for sealing formed on the outer circumference of the shaft.

The seventh construction comprises :
an external cylinder having a flange at one end of the cylinder body and holes near the other end,
a pointed head formed integrally by bending or fastened as a separate piece at the other end of the external,
a shaft inserted from one end of said external cylinder and having a convex part serving as tightening allowance with inner face of said external cylinder and protector against falling on the outer circumference, and
a bar-shaped anchor member interposed between the other end of the shaft and said pointed head or formed integrally with said shaft or fastened to it as a separate piece, the other end of which faces the holes of said external cylinder, and
   the external cylinder flange being realized as a donut-shaped plate separate from the cylinder body, the periphery of the hole of the plate being bent downward, the top end of the cylinder body being expanded in diameter and bent and , in the state where the donut-shaped plate being fitted to the cylinder body ,the bent part of the donut-shaped plate being reduced in size and fastened to the cylinder body.

The eighth construction comprises :
an external cylinder having a flange at one end of the cylinder body and holes near the other end,
a pointed head formed integrally by bending or fastened as a separate piece at the other end of the external,
a shaft inserted from one end of said external cylinder,
a convex formed on either the outer circumference of the shaft or on the inner face of said external cylinder for serving as tightening allowance, so that by hitting the shaft is driven together with the external cylinder and after reaching the flange of the external cylinder to the material surface the shaft is driven into the external cylinder, and
a bar-shaped anchor member interposed between the other end of the shaft and said pointed head or formed integrally with said shaft or fastened to it as a separate piece, the other end of which faces the holes of said external cylinder.

As the shaft is driven by hitting its head with a hammer, the external cylinder and the shaft are driven together with the spacer cylinder and stop when the external cylinder is driven up to the flange. With further hitting, the spacer cylinder is compressed with the shaft head and destroyed to separate because any further motion of the external cylinder is prevented by the flange. With continued hitting, the (shaft) head is driven up to the surface of the flange of the external cylinder. At that time, the anchor member goes out through the holes of the external cylinder and penetrate to the inside of the substrate. Thus, it turns into an anchor resistant to the drawing force of the nail.

With the construction of the present invention, the bar-shaped anchor member rushes out in the longitudinal direction, the tip of the bar first, from the side faces near the tip of the external cylinder, and the anchor member smoothly penetrates into the (substrate) layer without destroying it. Therefore, it also ensures good stability of the root of the fastener. Moreover, the fastener, the tip of which can be finished in the shape of a pointed head, is easy to drive and does not unduly destroy the (substrate) layer. Furthermore, because the size (of the fastener) is determined by (that of) the external cylinder and the shaft or the external cylinder and the anchor member, the fastener can be made smaller compared with conventional ones and easy for driving and also for waterproofing around the driven nail. In addition, by selection of the size, material strength and length of the anchor member, it becomes possible to freely design the yield strength to drawing.

Moreover, because of (presence of) the spacer cylinder, the shaft does not advance in the external cylinder until the external cylinder is driven about completely. Therefore, the anchor member rushes out of the external cylinder after the external cylinder is driven almost completely, thus minimizing the risk of undue destruction of the surrounding part of the (substrate) layer in which the fastener is driven.

Furthermore, because the portion up to said flange of said external cylinder is larger in size compared with other parts, this improves the waterproofing effect of that portion.

### BRIEF DESCRIPTION OF THE DRAWINGS

Fig. 1 is a front view of an embodiment of the present invention.

Fig. 2 is a longitudinal sectional view of Fig. 1.

Fig. 3 is an end-face drawing III-III of Fig. 1.

Fig. 4 is a sectional view in the state of use.

Fig. 5 indicates the second embodiment of the lower part of the external cylinder.

Fig. 6 indicates the third embodiment of the lower part of the external cylinder.

Fig. 7 indicates the fourth embodiment of the lower part of the external cylinder.

Fig. 8 indicates other embodiment of the external cylinder.

Fig. 9 indicates other embodiment of the external cylinder.

Fig. 9a indicates other embodiment of the external cylinder flange.

Fig. 10 is a front view of the second embodiment of the anchor member.

Fig. 11 is a left side view of Fig. 10.

Fig. 12 is a front view of the third embodiment of the anchor member.

Fig. 13 is a right side view of Fig. 12.

Fig. 14 is a drawing of other embodiment of the tack portion between the external cylinder and the shaft.

Fig. 15 is a drawing of other embodiment of the tack portion between the external cylinder and the shaft.

Fig. 16 indicates other embodiment of the top of the shaft.

Fig. 17 is a front view of other embodiment of the waterproofing means of the shaft.

Fig. 18 is a longitudinal sectional view of Fig. 17.

Fig. 19 is a longitudinal sectional view, of the embodiment of the waterproofing means of the shaft.

Fig. 20 is a front view of other embodiment of the external cylinder flange.

Fig. 21 is a longitudinal sectional view of Fig. 20.

Fig. 22 is a front view of the embodiment in which the external cylinder and the shaft are driven separately.

Fig. 23 is a longitudinal sectional view of Fig. 22.

### PREFERRED EMBODIMENTS OF THE INVENTION

Modes of operation of the present invention will be explained hereafter based on embodiments indicated on drawings.

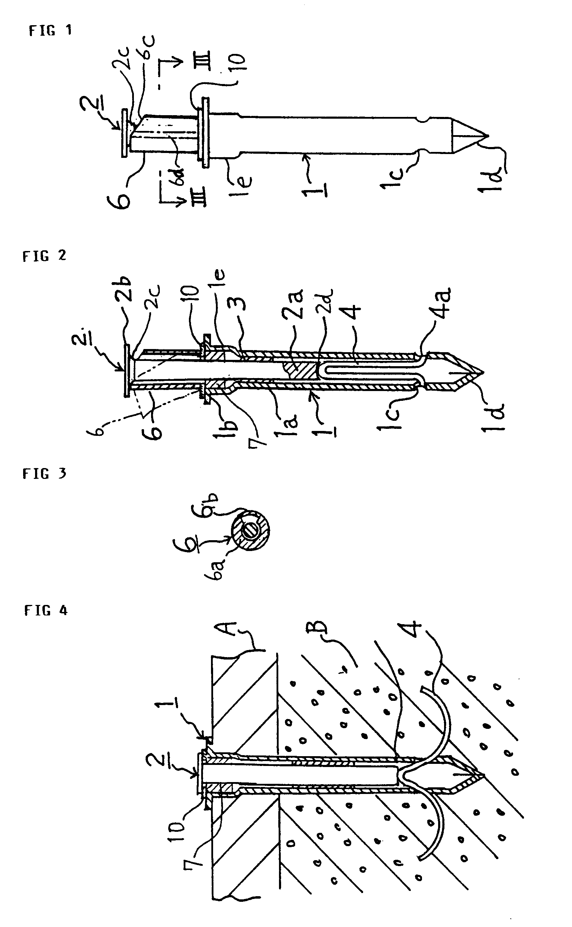

In Fig. 1, 2, 3, the external cylinder 1 has a concentric round flange 1b at the top end of the steel cylinder body 1a and the bottom end is bent to form a pointed head 1d. Moreover, it has a hole 1c at 2 points facing opposite to each other on the diameter near the pointed head 1d. The holes 1c of the external cylinder are slits long in the axial direction of the external cylinder. And the portion up to said flange of said external cylinder is larger in size compared with other parts.

The columnar body 2a of the steel shaft 2 is inserted from the top end of said external cylinder 1 and has a concentric round head 2b at to the top end, with a tapered face 2c spreading to the head side formed at the border between said shaft body 2 and said head 2b. Moreover, on the bottom face of said shaft 2 is formed a concave part for positioning 2d. And, an adhesive (or bonding agent) 3 is coated on the outer circumference of the columnar body 2a, and this prevents the shaft 2 from falling by adhesion or friction with the inner face of the cylinder body 1a. A sealing packing 7 is interposed between the shaft 2 and the large-diameter portion 1e of the external cylinder to prevent leakage of water.

The bar-shaped anchor member 4 is interposed between the bottom end of the shaft 2 and the upper part of said pointed head 1d and its lower end faces the holes 1c of said external cylinder 1. The anchor member 4, which is composed of a round steel wire, is bent in the shape of a reversed U with the both ends 4a of the metal wire on the lower side, and those both ends 4a are bent in a way to face the holes 1c of said external cylinder 1.

The spacer cylinder 6 is interposed between the external cylinder flange 1b and the shaft head 2b. The spacer cylinder 6, which is composed of a plastic (synthetic resin) cylinder, is made thinner (thin part 6b) than the other part (thick part 6a) on one side as against a border set in the axial direction. And, a slope face 6c is provided in such a way that the top face of the thin part 6b may be lower at the end face on said shaft head of said part on one side (thin part 6b).

A washer 9 is interposed at the border between said spacer 6 and said cylinder body 1a.

In the above-described construction, Fig. 4 explains hereafter a case where an exterior material A such as roofing tile, wood plate, etc. is fastened to the surface of an autoclaved lightweight foamed concrete (ALC) substrate B by means of nails of the present invention. As the shaft 2 is driven by hitting its head 2b with a hammer, the external cylinder 1 and the shaft 2 are driven together with the spacer cylinder 6 and stop when the external cylinder 1 is driven up to the flange.

With further hitting, because any further motion of the external cylinder 1 is prevented by the flange 1b, the spacer cylinder 6 is compressed with the head 2b of the shaft 2, and a component force in the radial direction to the thick part 6a side is produced at the top of the spacer cylinder 6 as against the shaft center as border, by the sloped face 6c of the spacer cylinder 6 and the tapered face 2c of the shaft 2. For that reason, the spacer cylinder 6 inclines from its top by shifting in the radial direction from the shaft 2 as indicated with a virtual line, and the thin part 6b is destroyed to separate from the shaft 2 under a strong pressure of the shaft 2. And, the spacer cylinder 6 is separated gently about in one direction without splashing vigorously to the surrounding parts at the hitting of the shaft. At that time, the washer 9 prevents the lower part of the spacer cylinder 6 from biting into the portion between the shaft and the external cylinder.

With continued hitting, the adhesion of the adhesive 3 is released, and the shaft head 2b is driven up to the surface of the flange 1b of the external cylinder 1 through the washer 9. At that time, the anchor member 4 goes out through the holes 1c of the external cylinder in order in the axial direction to penetrate to the inside of the substrate B.

Here, because of the presence of a concave part for positioning 2d at the bottom end face of the shaft 2, the anchor member 4 goes out smoothly from the external cylinder by being maintained in such a way that the axial line of the shaft 2 and that of the anchor member 4 about agree with each other. Moreover, since the holes 1c are slits, no severe accuracy is requested in the positioning of the tip of the anchor member 4 against the holes. Moreover, there are also cases where the anchor member 4 goes out from the external cylinder 4 by being guided in the direction of length of the holes 1c. In that case, the anchor member 4 takes a balanced posture at the part getting out of the external cylinder. This turns the anchor member 4 into an anchor resistant to the drawing force of the nail. Furthermore, because of presence of the spacer cylinder 6, the shaft 2 does not advance in the external cylinder until the external cylinder 1 is driven completely. For that reason, the anchor member 4 rushes out of the external cylinder only after complete driving of the external cylinder 1, thus avoiding undue destruction of the surrounding part of the (substrate) layer in which the fastener is driven.

Here, when this fastener is driven through a waterproofing sheet, the adhesive material of the waterproofing sheet sticks in a comparatively large amount to the tip of the external cylinder 1 but it also sticks in a large quantity to the large diameter part 1e, thus increasing the waterproofing effect.

The adhesive 3 resists to any force in the opposite direction which may be produced in case of falling off of the shaft 2 from the external cylinder 1 during the handling (of the fastener) or produced because of an elastic restorative force of the anchor member 4 during the driving of the shaft 2.

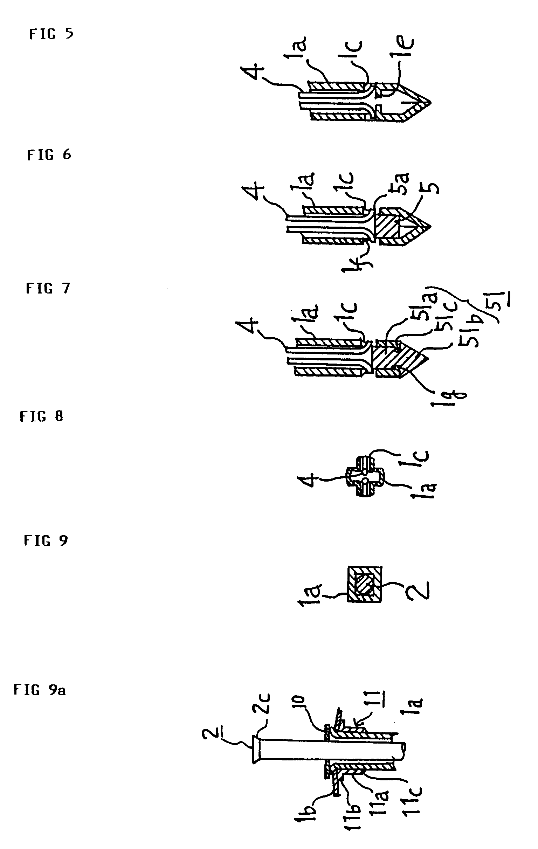

Fig. 5 indicates other embodiment. The holes 1c of the external cylinder are cut out on the upper side and bent inward to form a guide piece 1e, which supports the bottom end of the anchor member 4.

Fig. 6 indicates still other embodiment. On the inside at the bottom part of the external cylinder, a columnar guide member 5 is interposed between the pointed head 1d and the holes 1c. The top end of the guide member 5 is composed of a flat face which is about perpendicular to the axial direction of the external cylinder 1. In this case, as shown in Fig. 6, the bottom face of the anchor member 4 is not only subject to a reactional force from the top face of the guide member 5 and but also powerfully pressed against the corner 5a at the circumference on the top face of the guide member 5, and the tip of the anchor member 4 is bent upward. With continued hammering, the top of the portion where the anchor member 4 passes through the external cylinder holes 1c is also strongly pressed against the corner 1f of the external cylinder holes 1c. As a result, the anchor member goes out of the external cylinder in the state strongly pinched at its top and bottom faces by the portion where it passes through the external cylinder holes 1c and is therefore "squeezed" to bend upward in a way to draw about an arc.

Fig. 7 is an yet another embodiment. It is a case where the bottom end of said guide member 5 is pointed as a substitute for said pointed end 1d of external cylinder. Namely, the guide member 51 is realized by integrally forming a downward pointed ridge 51b at the bottom end of a column 51a concentric with the cylinder body 1a of the external cylinder 1, with a flat face at the top end. And, on the circumference of the column 51a is provided a circular groove 51c, to which a bent piece 1g at the bottom end of said external cylinder 1 is fit by caulking.

Moreover, as shown in Fig. 8, the external cylinder 1 is molded in a way to have a plural number of convex and concave stripes along its axial direction, to increase the bonding power. In this case, the positioning of the anchor member 4 against the holes 1c becomes easier and surer if the anchor member 4 is interposed between convex stripes facing each other, and holes 1c are provided in those parts. Furthermore, if, in this case, the outside diameter of the shaft 2 is made slightly larger to produce a "tightening allowance", said adhesive 3 can be omitted. In addition, also in the case where the shaft section of the external cylinder 1 is rectangular (square) as shown in Fig. 9, it is possible to omit said adhesive 3 by increasing the size of the shaft 2 to provide a tightening allowance.

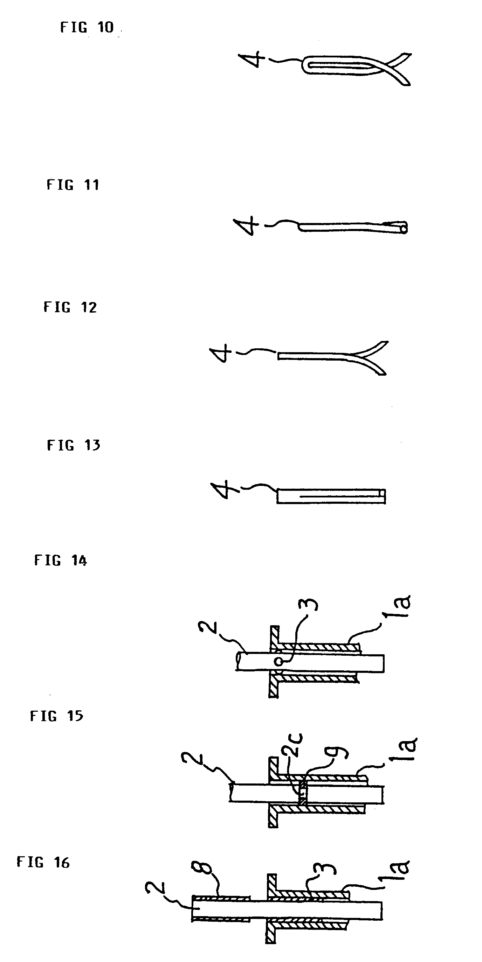

Said anchor member 4 is replaced by such types, for example, as one realized by bending both ends of an l-shaped (small letter of script type of alphabet) wire to outside as shown in Fig. 10, 11 or one which is prepared by cutting a thin strip from the bottom side to just before the top side in the longitudinal direction and bending it in the shape of the letter λ as shown in Fig. 12, 13, etc. Moreover, it is also all right to use a J-shaped wire (not illustrated) and make it come out through a hole of the external cylinder. The anchor member 4 is either molded integrally with the shaft 2 or prepared separately and fastened to the latter by means of adhesive or welding.

A material for ordinary nails is used as anchor member. Moreover, use of spring material such as stainless spring steel, which is highly elastic, ensures good fastening strength because it returns to its original state even if the positional relation between the external cylinder 1 and the anchor member is shifted because of an earthquake, etc.

If a plural number of grooves 6d (virtual line of Fig. 1) along the axial direction are provided on the outer circumference of the spacer cylinder 6 in replacement for or in addition to above, breaking takes place also in this part.

In the case where said spacer cylinder 6 is not provided, said adhesive 3 is made to have a strong fastening power. This makes it possible for the external cylinder 1 to be driven together with the shaft 2 until it is completely driven, and then the fastening of the adhesive 3 is released and the shaft 2 is driven into the external cylinder 1. Moreover, a plural number of convex parts 3 are provided at equal intervals on the outer circumference of the column body 2a in place of the adhesive 3 as shown in Fig. 14, and (those convex parts) serve as "tightening allowance" with the inner face of the external cylinder, and (the external cylinder 1 and the shaft 2) form a single body until the external cylinder 1 is completely driven. In place of the convex parts 3, convex stripes in axial direction are provided and disposed in the circumferential direction. Furthermore, it is also all right to press (or hit) the external cylinder 1 from outside to form those convex parts or convex stripes in projection on the inner side of the external cylinder 1. Or, as shown in Fig. 15, it may also be possible to provide a circular groove 2c on the outer circumference of the shaft 2 and fit a ring packing 9 there. Those variations are applicable even when spacer cylinder 6 is set, but the bonding power between the external cylinder and the shaft is stipulated sufficiently in detail for preventing the shaft from falling off.

Fig. 16 indicates other embodiment of shaft in which the shaft has no head and a sealing material layer 8 is coated at the top part of the shaft. In this case, the sealing material layer 8 prevents penetration of rain water after driving of the shaft 2 to inside the external cylinder 1.

The present invention is applicable to an extremely wide range of uses as member fastener such as nail, rivet, tatami mat rivet, etc. Moreover, the material of the driven member can be applied to cemented excelsior board, timber, tatami mat, etc. in addition to above.

This invention includes following various embodiments in addition to the above.
( 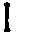 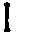 ) Embodiments mainly including the spacer 6.
   [1] A member fixing means comprising :
      an external cylinder having a flange at one end of the cylinder body and holes near the other end,
      a pointed head formed integrally by bending or fastened as a separate piece at the other end of the external cylinder,
      a shaft inserted from one end of said external cylinder and having a head at one end,
      a bar-shaped anchor member interposed between the other end of the shaft and said pointed head or formed integrally with said shaft or fastened to it as a separate piece, the other end of which faces the holes of said external cylinder, and
      a spacer cylinder interposed between said external cylinder flange and said shaft head, and
         the spacer cylinder is made thinner than other part on one side as against a border set in the axial direction, and a slope face is provided in such a way that the top face of the thin part may be lower.
   [2] A member fixing means comprising :
      an external cylinder having a flange at one end of the cylinder body and holes near the other end,
      a pointed head formed integrally by bending or fastened as a separate piece at the other end of the external cylinder,
      a shaft inserted from one end of said external cylinder and having a head at one end,
      a bar-shaped anchor member interposed between the other end of the shaft and said pointed head or formed integrally with said shaft or fastened to it as a separate piece, the other end of which faces the holes of said external cylinder, and
      a spacer cylinder interposed between said external cylinder flange and said shaft head, and
         the spacer cylinder is made thinner than other part on one side as against a border set in the axial direction, and the shaft has a tapered face spreading to the head side formed at the border between the shaft and the head.
   [3] A member fixing means comprising :
      an external cylinder having a flange at one end of the cylinder body and holes near the other end,
      a pointed head formed integrally by bending or fastened as a separate piece at the other end of the external cylinder,
      a shaft inserted from one end of said external cylinder and having a head at one end,
      a bar-shaped anchor member interposed between the other end of the shaft and said pointed head or formed integrally with said shaft or fastened to it as a separate piece, the other end of which faces the holes of said external cylinder, and
      a spacer cylinder interposed between said external cylinder flange and said shaft head, and
         the spacer cylinder is made thinner than other part on one side as against a border set in the axial direction, and a slope face is provided in such a way that the top face of the thin part may be lower.
         the spacer cylinder is made thinner than other part on one side as against a border set in the axial direction, a slope face is provided in such a way that the top face of the thin part may be lower , and the shaft has a tapered face spreading to t he head side formed at the border between the shaft and the head.
   [4] A member fixing means in said clause 1 or 2 or 3 :
      a washer is interposed at the border between the spacer cylinder and the cylinder body.
( 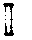 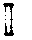 ) Embodiments mainly including the concave part 2d formed on the bottom face of the shaft are as follows.
   [1] A member fixing means comprising :
      an external cylinder having a flange at one end of the cylinder body and holes near the other end,
      a pointed head formed integrally by bending or fastened as a separate piece at the other end of the external cylinder,
      a shaft inserted from one end of said external cylinder and having a head at one end,
      a bar-shaped anchor member interposed between the other end of the shaft and said pointed head or formed integrally with said shaft or fastened to it as a separate piece, the other end of which faces the holes of said external cylinder, and
      a spacer cylinder interposed between said external cylinder flange and said shaft head, and
         on the bottom face of said shaft is formed a concave part for positioning.
   [2] A member fixing means comprising :
      an external cylinder having a flange at one end of the cylinder body and holes near the other end,
      a pointed head formed integrally by bending or fastened as a separate piece at the other end of the external,
      a shaft inserted from one end of said external cylinder and having a convex part serving as tightening allowance with inner face of said external cylinder and protector against falling on the outer circumference, and
      a bar-shaped anchor member interposed between the other end of the shaft and said pointed head or formed integrally with said shaft or fastened to it as a separate piece, the other end of which faces the holes of said external cylinder, and
         on the bottom face of said shaft is formed a concave part for positioning.
( 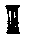 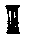 ) Embodiments mainly including the slit hole 1c of the external cylinder 1 are as follows.
   [1] A member fixing means comprising :
      an external cylinder having a flange at one end of the cylinder body and holes near the other end,
      a pointed head formed integrally by bending or fastened as a separate piece at the other end of the external cylinder,
      a shaft inserted from one end of said external cylinder and having a head at one end,
      a bar-shaped anchor member interposed between the other end of the shaft and said pointed head or formed integrally with said shaft or fastened to it as a separate piece, the other end of which faces the holes of said external cylinder, and
      a spacer cylinder interposed between said external cylinder flange and said shaft head, and
         the hole of the external cylinder being slit along in the axial direction of the external cylinder.
   [2] A member fixing means comprising :
      an external cylinder having a flange at one end of the cylinder body and holes near the other end,
      a pointed head formed integrally by bending or fastened as a separate piece at the other end of the external,
      a shaft inserted from one end of said external cylinder and having a convex part serving as tightening allowance with inner face of said external cylinder and protector against falling on the outer circumference, and
      a bar-shaped anchor member interposed between the other end of the shaft and said pointed head or formed integrally with said shaft or fastened to it as a separate piece, the other end of which faces the holes of said external cylinder, and
         the hole of the external cylinder being slit along in the axial direction of the external cylinder.

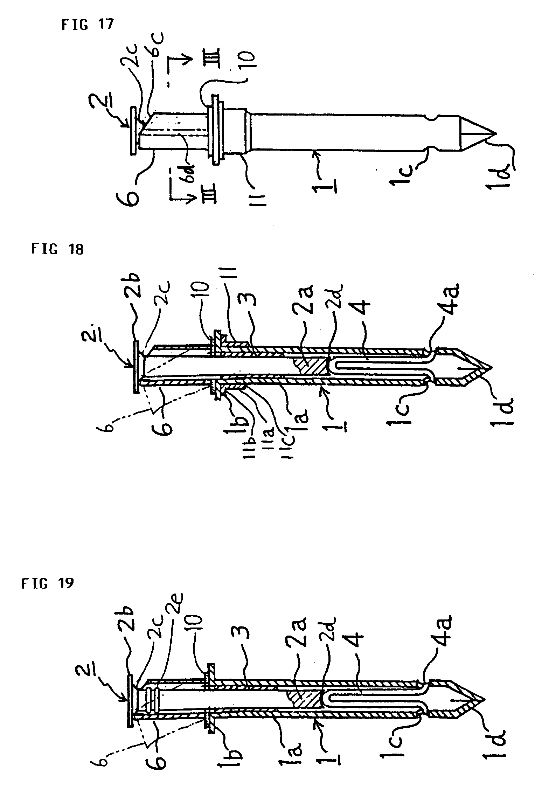

(IV) Fig. 17, 18 indicate other embodiments of the waterproofing means between the external cylinder 1 and the driving layer. A sleeve 11 is inserted in the outer circumference of the portion up to the flange of the external cylinder 1. The sleeve is made of a molded piece of synthetic resin, and an external flange 11b is provided at an end of the cylinder body 11a and a thin-nose tapered face 11 is provided on the other end. When this fastener is driven through a waterproofing sheet, the adhesive material of the waterproofing sheet sticks in a comparatively large amount to the tip of the external cylinder 1 but it also sticks in a large quantity to the sleeve 11, thus increasing the waterproofing effect.
   Embodiments mainly including the sleeve 11 inserted in the external cylider 1 are as follows.
   [1] A member fixing means comprising :
      an external cylinder having a flange at one end of the cylinder body and holes near the other end,
      a pointed head formed integrally by bending or fastened as a separate piece at the other end of the external,
      a shaft inserted from one end of said external cylinder and having a head at one end,
      a bar-shaped anchor member interposed between the other end of the shaft and said pointed head or formed integrally with said shaft or fastened to it as a separate piece, the other end of which faces the holes of said external cylinder, and
      a spacer cylinder interposed between said external cylinder flange and said shaft head, and
      a sleeve inserted in the outer circumfelence of the portion up to the flange of the external cylinder.
   [2] A member fixing means comprising :
      an external cylinder having a flange at one end of the cylinder body and holes near the other end,
      a pointed head formed integrally by bending or fastened as a separate piece at the other end of the external,
      a shaft inserted from one end of said external cylinder and having a convex part serving as tightening allowance with inner face of said external cylinder and protector against falling on the outer circumference, and
      a bar-shaped anchor member interposed between the other end of the shaft and said pointed head or formed integrally with said shaft or fastened to it as a separate piece, the other end of which faces the holes of said external cylinder, and
      a sleeve inserted in the outer circumfelence of the portion up to the flange of the external cylinder.
(V) Fig. 19 indicates an embodiment of the waterproofing sheet between the shaft 2 and the external cylinder 1. A plural number of circumferential convex stripes 2e for sealing are formed by rolling on the outer circumference of the shaft 2. Those circumferential convex stripes 2e are made to swell (to a height of approximately 0.1 to 0.2 mm) by means of plastic deformation by pressing a rotating round die against a round shaft. With an approximate dimension, they fit the external cylinder 1 easily, provide waterproofing effects and do not present any problem to the driving of the shaft 2.
   Fig. 16 indicates other embodiment of the shaft in which the shaft 2 has no head and a sealing material layer 8 is coated to the top of the shaft. In this case, the sealing material layer 8 prevents penetration of rain water after driving of the shaft 2 to inside the external cylinder 1. Moreover, a sealing material is bonded to the lower part of the shaft and the upper part of the anchor member 4. In addition, as waterproofing means for the inside of the external cylinder 1, a rotating round die is pressed from the outside of the turning external cylinder 1 to form circumferential convex stripes for sealing on the inner circumference of the external cylinder, or a ring packing 9 is interposed as shown in said Fig. 15.
   Embodiments mainly including the waterproofing means for the shaft 2 are as follows.
   [1] A member fixing means comprising :
      an external cylinder having a flange at one end of the cylinder body and holes near the other end,
      a pointed head formed integrally by bending or fastened as a separate piece at the other end of the external,
      a shaft inserted from one end of said external cylinder and having a head at one end,
      a bar-shaped anchor member interposed between the other end of the shaft and said pointed head or formed integrally with said shaft or fastened to it as a separate piece, the other end of which faces the holes of said external cylinder, and
      a spacer cylinder interposed between said external cylinder flange and said shaft head, and
      a circumferential convex stripe for sealing are formed on the outer circumference of the shaft or inner circumference of the external cylinder.
   [2] A member fixing means comprising :
      an external cylinder having a flange at one end of the cylinder body and holes near the other end,
      a pointed head formed integrally by bending or fastened as a separate piece at the other end of the external,
      a shaft inserted from one end of said external cylinder and having a convex part serving as tightening allowance with inner face of said external cylinder and protector against falling on the outer circumference, and
      a bar-shaped anchor member interposed between the other end of the shaft and said pointed head or formed integrally with said shaft or fastened to it as a separate piece, the other end of which faces the holes of said external cylinder, and
      a circumferential convex stripe for sealing are formed on the outer circumference of the shaft or inner circumference of the external cylinder.
   [3] A member fixing means comprising :
      an external cylinder having a flange at one end of the cylinder body and holes near the other end,
      a pointed head formed integrally by bending or fastened as a separate piece at the other end of the external,
      a shaft inserted from one end of said external cylinder and having a head at one end,
      a bar-shaped anchor member interposed between the other end of the shaft and said pointed head or formed integrally with said shaft or fastened to it as a separate piece, the other end of which faces the holes of said external cylinder, and
      a spacer cylinder interposed between said external cylinder flange and said shaft head, and
      a sealing material are applied between the external cylinder and the shaft or the anchor member.
   [4] A member fixing means comprising :
      an external cylinder having a flange at one end of the cylinder body and holes near the other end,
      a pointed head formed integrally by bending or fastened as a separate piece at the other end of the external,
      a shaft inserted from one end of said external cylinder and having a convex part serving as tightening allowance with inner face of said external cylinder and protector against falling on the outer circumference, and
      a bar-shaped anchor member interposed between the other end of the shaft and said pointed head or formed integrally with said shaft or fastened to it as a separate piece, the other end of which faces the holes of said external cylinder, and
      a sealing material are applied between the external cylinder and the shaft or the anchor member.

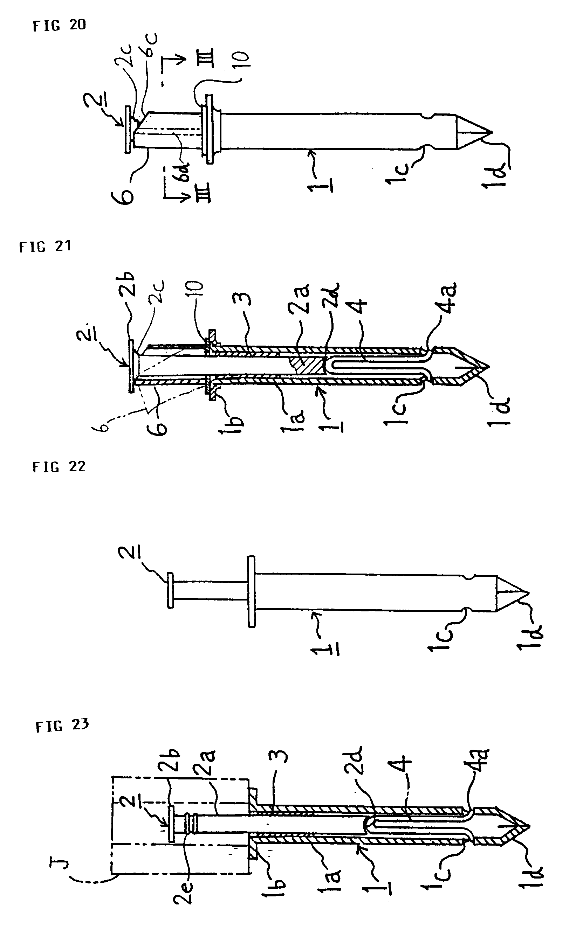

(VI) Fig. 20, 21 indicate embodiments in which the flange 1b of the external cylinder 1 is provided as a separate body. Said external cylinder flange 1b is realized as a donut-shaped plate separate from said cylinder body 1a, the periphery of the hole in the is bent downward, the top end of said cylinder body is expanded in diameter and bent and, in the state where said donut-shaped plate is fit to said cylinder body, the bent part of the donut-shaped plate is reduced in size and fastened to said cylinder body.
   Fig. 9a indicates other embodiment of external cylinder flange. The external cylinder flange 1b is provided as a donut-shaped plate separate from said cylinder body 1a, and the top end of said cylinder body 1a is expanded in diameter and bent. And, in the state where said donut-shaped plate is fit to said cylinder body, the sleeve 11 is inserted in close contact from the other end of said external cylinder, and those parts are paired for protection against falling. The sleeve 11 consists of a molded piece of synthetic resin, and an external flange 11b is provided at an end of the cylinder body 11a and a thin-nose tapered face 11 is provided on the other end. Moreover, when either a belleville spring or a disc spring is used as said donut-shaped plate, it alleviates vibrations and shocks to serve as protector against loosening of the substrate for driving.
   In this way, the external cylinder flange is provided as a separate body, and one end of the cylinder body is expanded in diameter and bent. And, in the state where said donut-shaped plate is fit to said cylinder body, the bent part of the donut-shaped plate is fastened to the cylinder body. Therefore, the flange is attached to the external cylinder by means of a die and a press, and (this external cylinder flange) is suitable for mass production.
   Moreover, the external cylinder flange is provided as a donut-shaped plate separate from said cylinder body, and one end of the cylinder body is expanded in diameter and bent and, in the state where said donut-shaped plate is fit to said cylinder body, the sleeve is inserted from the other end of said external cylinder, and those parts are paired for protection against falling. Therefore, there is no need of any punching equipment for attaching the flange to the cylinder body. Furthermore, in the case where (the fastener) is driven through a waterproofing sheet, a better waterproofing effect is obtained et the sleeve portion.
   Embodiments mainly including the separate flange 1b of the external cylinder 1 are as follows.
   [1] A member fixing means comprising :
      an external cylinder having a flange at one end of the cylinder body and holes near the other end,
      a pointed head formed integrally by bending or fastened as a separate piece at the other end of the external,
      a shaft inserted from one end of said external cylinder and having a head at one end,
      a bar-shaped anchor member interposed between the other end of the shaft and said pointed head or formed integrally with said shaft or fastened to it as a separate piece, the other end of which faces the holes of said external cylinder, and
      a spacer cylinder interposed between said external cylinder flange and said shaft head, and
         the external cylinder flange is realized as a donut-shaped plate separate from the cylinder body ,the periphery of the hole of the plate is bent to the external cylinder side, the one end of the cylinder body is expanded in diameter and bent , and in the state where the donut-shaped plate is fitted to the cylinder body, the bent part of the donut-shaped plate is reduced in size and fastened to the cylinder body.
   [2] A member fixing means comprising :
      an external cylinder having a flange at one end of the cylinder body and holes near the other end,
      a pointed head formed integrally by bending or fastened as a separate piece at the other end of the external,
      a shaft inserted from one end of said external cylinder and having a convex part serving as tightening allowance with inner face of said external cylinder and protector against falling on the outer circumference, and
      a bar-shaped anchor member interposed between the other end of the shaft and said pointed head or formed integrally with said shaft or fastened to it as a separate piece, the other end of which faces the holes of said external cylinder, and
         the external cylinder flange is realized as a donut-shaped plate separate from the cylinder body ,the periphery of the hole of the plate is bent to the external cylinder side, the one end of the cylinder body is expanded in diameter and bent , and in the state where the donut-shaped plate is fitted to the cylinder body, the bent part of the donut-shaped plate is reduced in size and fastened to the cylinder body.
   [3] A member fixing means comprising :
      an external cylinder having a flange at one end of the cylinder body and holes near the other end,
      a pointed head formed integrally by bending or fastened as a separate piece at the other end of the external,
      a shaft inserted from one end of said external cylinder and having a head at one end,
      a bar-shaped anchor member interposed between the other end of the shaft and said pointed head or formed integrally with said shaft or fastened to it as a separate piece, the other end of which faces the holes of said external cylinder, and
      a spacer cylinder interposed between said external cylinder flange and said shaft head, and
      a sleeve inserted in the outer circumfelence of the portion up to the flange of the external cylinder.
         the external cylinder flange is realized as a donut-shaped plate separate from the cylinder body , the one end of the cylinder body is expanded in diameter and bent , and in the state where the donut-shaped plate is fitted to the cylinder body, the sleeve is inserted from the other end of the external cylinder, and those parts are paired.
   [4] A member fixing means comprising :
      an external cylinder having a flange at one end of the cylinder body and holes near the other end,
      a pointed head formed integrally by bending or fastened as a separate piece at the other end of the external,
      a shaft inserted from one end of said external cylinder and having a convex part serving as tightening allowance with inner face of said external cylinder and protector against falling on the outer circumference, and
      a bar-shaped anchor member interposed between the other end of the shaft and said pointed head or formed integrally with said shaft or fastened to it as a separate piece, the other end of which faces the holes of said external cylinder, and
      a sleeve inserted in the outer circumfelence of the portion up to the flange of the external cylinder.
         the external cylinder flange is realized as a donut-
(VII) Fig. 22, 23 indicate embodiments in which the shaft is driven after the external cylinder has been driven. In this case, there is no need of providing any space or convex part for integrally driving said external cylinder and shaft. In the state where the center hole of a cylindrical jig J is inserted on the shaft 2, both of them are supported by one hand. Next, as the head of the jig J is driven by hitting with a hammer held in the other hand, the external cylinder 1 is driven up to the flange 1b and stops there. Next, as the jig J is removed and the heat of the shaft 2 is hit with the hammer, because any further motion of the external cylinder 1 is prevented by the flange 1b, the adhesion of the adhesive 3 is released, and the shaft head 2b is driven up to the surface of the flange 1b of the external cylinder 1. And, the anchor member 4 goes out through the holes 1c of the external cylinder in order in the axial direction to penetrate to the inside of the substrate B.
   Moreover, convex part is formed on either the outer circumference of the shaft or on the inner circumference of the external cylinder, or a bonding agent is interposed between the outer circumference and the shaft or anchor member, or either an expanded tapered face or swollen face is formed at one end of the shaft. Therefore, (the adhesive 3) prevents falling of the shaft from the external cylinder in case of working of any force in the opposite direction produced during the handling (of the fastener) or produced because of an elastic restorative force of the anchor member.
   Embodiments mainly including the separatly driven external cylinder and shaft1 are as follows.
   [1] A member fixing means comprising :
      an external cylinder having a flange at one end of the cylinder body and holes near the other end,
      a pointed head formed integrally by bending or fastened as a separate piece at the other end of the external,
      a shaft inserted from one end of said external cylinder and having a head at one end,
      a bar-shaped anchor member interposed between the other end of the shaft and said pointed head or formed integrally with said shaft or fastened to it as a separate piece, the other end of which faces the holes of said external cylinder.
   [2] A member fixing means comprising :
      an external cylinder having a flange at one end of the cylinder body and holes near the other end,
      a pointed head formed integrally by bending or fastened as a separate piece at the other end of the external,
      a shaft inserted from one end of said external cylinder and having a head at one end,
      a bar-shaped anchor member interposed between the other end of the shaft and said pointed head or formed integrally with said shaft or fastened to it as a separate piece, the other end of which faces the holes of said external cylinder, and
      a convex formed on the outer circumference of the shaft or inner circumference of the external cylinder.
   [3] A member fixing means comprising :
      an external cylinder having a flange at one end of the cylinder body and holes near the other end,
      a pointed head formed integrally by bending or fastened as a separate piece at the other end of the external,
      a shaft inserted from one end of said external cylinder and having a head at one end,
      a bar-shaped anchor member interposed between the other end of the shaft and said pointed head or formed integrally with said shaft or fastened to it as a separate piece, the other end of which faces the holes of said external cylinder, and
      an bonding agent applied between the external cylinder and the shaft .
   [4] A member fixing means comprising :
      an external cylinder having a flange at one end of the cylinder body and holes near the other end,
      a pointed head formed integrally by bending or fastened as a separate piece at the other end of the external,
      a shaft inserted from one end of said external cylinder and having a head at one end,
      a bar-shaped anchor member interposed between the other end of the shaft and said pointed head or formed integrally with said shaft or fastened to it as a separate piece, the other end of which faces the holes of said external cylinder, and
      an expanded tapered face or swollen face formed at one end of the shaft.

The present invention is not restricted to said embodiments and modes of operation, and includes a variety of variations without deviating from the spirit and scope of the patent application.

## Claims

1. A member fixing means comprising :
an external cylinder having a flange at one end of the cylinder body and holes near the other end,
a pointed head formed integrally by bending or fastened as a separate piece at the other end of the external cylinder,
a shaft inserted from one end of said external cylinder and having a head at one end,
a bar-shaped anchor member interposed between the other end of the shaft and said pointed head or formed integrally with said shaft or fastened to it as a separate piece, the other end of which faces the holes of said external cylinder, and
a spacer cylinder interposed between said external cylinder flange and said shaft head, and
the portion up to said flange of said external cylinder is larger in size compared with other parts thereof.

2. A member fixing means comprising :
an external cylinder having a flange at one end of the cylinder body and holes near the other end,
a pointed head formed integrally by bending or fastened as a separate piece at the other end of the external,
a shaft inserted from one end of said external cylinder and having a convex part serving as tightening allowance with inner face of said external cylinder and protector against falling on the outer circumference, and
a bar-shaped anchor member interposed between the other end of the shaft and said pointed head or formed integrally with said shaft or fastened to it as a separate piece, the other end of which faces the holes of said external cylinder, and
the portion up to said flange of said external cylinder is larger in size compared with other parts thereof.

3. A member fixing means comprising :
an external cylinder having a flange at one end of the cylinder body and holes near the other end,
a pointed head formed integrally by bending or fastened as a separate piece at the other end of the external,
a shaft inserted from one end of said external cylinder and having a convex part serving as tightening allowance with inner face of said external cylinder and protector against falling on the outer circumference, and
a bar-shaped anchor member interposed between the other end of the shaft and said pointed head or formed integrally with said shaft or fastened to it as a separate piece, the other end of which faces the holes of said external cylinder, and
on the bottom face of said shaft is formed a concave part for positioning.

4. A member fixing means comprising :
an external cylinder having a flange at one end of the cylinder body and holes near the other end,
a pointed head formed integrally by bending or fastened as a separate piece at the other end of the external,
a shaft inserted from one end of said external cylinder and having a convex part serving as tightening allowance with inner face of said external cylinder and protector against falling on the outer circumference, and
a bar-shaped anchor member interposed between the other end of the shaft and said pointed head or formed integrally with said shaft or fastened to it as a separate piece, the other end of which faces the holes of said external cylinder, and
the hole of the external cylinder being slit along in the axial direction of the external cylinder.

5. A member fixing means comprising :
an external cylinder having a flange at one end of the cylinder body and holes near the other end,
a pointed head formed integrally by bending or fastened as a separate piece at the other end of the external,
a shaft inserted from one end of said external cylinder and having a convex part serving as tightening allowance with inner face of said external cylinder and protector against falling on the outer circumference, and
a bar-shaped anchor member interposed between the other end of the shaft and said pointed head or formed integrally with said shaft or fastened to it as a separate piece, the other end of which faces the holes of said external cylinder, and
a sleeve inserted in the outer circumfelence of the portion up to the flange of the external cylinder.

6. (After amendment) A member fixing means comprising :
an external cylinder having a flange at one end of the cylinder body and holes near the other end,
a pointed head formed integrally by bending or fastened as a separate piece at the other end of the external,
a shaft inserted from one end of said external cylinder,
a convex formed on either the outer circumference of the shaft or on the inner face of said external cylinder for serving as tightening allowance, so that by hitting the shaft is driven together with the external cylinder and after reaching the flange of the external cylinder to the material surface the shaft is driven into the external cylinder,
a bar-shaped anchor member interposed between the other end of the shaft and said pointed head or formed integrally with said shaft or fastened to it as a separate piece, the other end of which faces the holes of said external cylinder, and
a circumferential convex stripe for sealing formed on the outer circumference of the shaft.

7. A member fixing means comprising :
an external cylinder having a flange at one end of the cylinder body and holes near the other end,
a pointed head formed integrally by bending or fastened as a separate piece at the other end of the external,
a shaft inserted from one end of said external cylinder and having a convex part serving as tightening allowance with inner face of said external cylinder and protector against falling on the outer circumference, and
a bar-shaped anchor member interposed between the other end of the shaft and said pointed head or formed integrally with said shaft or fastened to it as a separate piece, the other end of which faces the holes of said external cylinder, and
the external cylinder flange being realized as a donut-shaped plate separate from the cylinder body, the periphery of the hole of the plate being bent downward, the top end of the cylinder body being expanded in diameter and bent and , in the state where the donut-shaped plate being fitted to the cylinder body ,the bent part of the donut-shaped plate being reduced in size and fastened to the cylinder body.

8. (After amendment) A member fixing means comprising :
an external cylinder having a flange at one end of the cylinder body and holes near the other end,
a pointed bead formed integrally by bending or fastened as a separate piece at the other end of the external,
a shaft inserted from one end of said external cylinder,
a convex formed on either the outer circumference of the shaft or on the inner face of said external cylinder for serving as tightening allowance, so that by hitting the shaft is driven together with the external cylinder and after reaching the flange of the external cylinder to the material surface the shaft is driven into the external cylinder, and
a bar-shaped anchor member interposed between the other end of the shaft and said pointed head or formed integrally with said shaft or fastened to it as a separate piece, the other end of which faces the holes of said external cylinder.
